# EUROPEAN PATENT APPLICATION

(11) **EP 4 274 043 A1**
(43) Date of publication of application: **08.11.2023**
(21) Application number: 23171512.9
(22) Date of filing: 04.05.2023
(51) Int. Cl.: H02G 3/08, H02G 3/12, F16B 39/28

(54) **INSTALLATION BOX ASSEMBLY AND METHOD FOR ASSEMBLING SAID INSTALLATION BOX ASSEMBLY**

(30) Priority: 04.05.2022 NL 2031770
(71) Applicant: Attema B.V., 4203 NJ Gorinchem (NL)
(72) Inventor: de HOOG, Antonie, 4203 NJ GORINCHEM (NL)
(74) Representative: EP&C

(57) **Abstract**

An installation box assembly for mounting in a hole of a wall, comprising an installation box comprising a bottom wall, a side wall having a first end that is attached to the bottom wall, and a free, second end, and at least one clamping device for clamping the installation box to the wall, the clamping device comprising a screw member, the screw member comprising a first section, a second section and a third section extending between the tip end and the head, the first and third section having outer thread, wherein the clamping device further comprises a first clamp member configured to travel along the screw member between the tip end and the head end, the first clamp member comprising a nut part and a first clamp part, the nut part comprising inner thread configured to mesh with the outer thread of the first section of the screw member for assembling the installation box assembly, and with the outer thread of the third section of the screw member, wherein in the assembled state the installation box is configured to prevent the inner thread of the nut part to mesh with the outer thread of the first section of the screw member, while allowing the inner tread of the nut part to mesh with the outer thread of the third section of the screw member when rotating the screw member.

## Description

### FIELD OF THE INVENTION

The invention relates to the field of electrical installation material, and more specifically to installation box assemblies for mounting in a hole of a wall, in particular a hollow wall. The wall may be a ceiling or a floor of a room. The invention further relates to a method of assembling an installation box assembly.

Herein, an installation box is deemed equivalent to an electrical installation box, a junction box, and an electrical junction box. The installation box may be used for housing installation material in general, (junctions between) electrical conductors, electrical signal wires, optical cables or fibers, and may further accommodate switching material, one or more electrical or optical sockets, signaling material, telecommunication material, building automation material, controller or computer material, and the like.

### BACKGROUND OF THE INVENTION

In installations of the kind described above, installation boxes that are to be installed on walls generally comprise the installation box and a type of connection mechanism for installing the installation box in the hollow wall. The connection mechanism can for example comprise a clamping device connected to the installation box, wherein the clamping device clamps itself to the hollow wall, thereby clamping the installation box to said wall.

Current clamping devices often consist of a screw, or bolt-like unit, and a nut-like clamping shoe that can travel along the screw upon a relative rotation between the screw and the nut-like clamping shoe. This way the clamping shoe can be moved towards a rear side of the hollow wall when installing the installation box, until the clamping shoe engages said rear side. The clamping shoe can also be moved away from the rear side of the hollow wall, for example when uninstalling the installation box from the hollow wall.

When the clamping shoe travels away from the rear side of the hollow wall during installation, but in particular during uninstallation, there is a risk that the clamping shoe is screwed off the screw.

During installation it may for example happen that the user uses an electric screwing tool and he or she accidentally has the rotational setting of the electric screwing tool in the wrong direction, i.e. the direction at which the clamping shoe moves away from the rear side of the wall. The electric screwing tool does not provide accurate feedback to the user in case the clamping shoe is screwed off the screw. This may result in a loss of the clamping shoe, because the clamping shoe could fall behind the hollow wall, out of reach for the user. That also means that the clamping device does not function anymore so that the installation box cannot be installed correctly.

The risk of losing the clamping shoe is even more prone when uninstalling the installation box from the wall. During uninstallation the clamping shoe is moved away from the rear side of the wall, i.e. towards the tip end of the screw, or bolt-like unit. If the screw is rotated too many times, the clamping shoe will be screwed off the tip end of the screw with the risk of losing the clamping shoe behind the wall.

Current installation box assemblies comprising the installation box and a clamping device have a drawback that they have a limited workability, in the sense that they are suited for either relatively thin hollow walls, i.e. having a thickness of about 1 mm, or for thick hollow walls, i.e. having a thickness of about 45 mm, or for walls having a thickness between 10-40 mm, i.e. walls being considered thick nor thin. There is a need for an installation box assembly that is suitable for both thin and thick hollow walls.

### SUMMARY OF THE INVENTION

It would be desirable to at least partially remove the above drawbacks.

To better address one or more of these concerns, in a first aspect of the invention an installation box assembly is provided for mounting in a hole of a wall having a front side and a rear side. The installation box assembly comprising:
- an installation box having a longitudinal axis, comprising
   ∘ a bottom wall extending transverse to the longitudinal axis,
   ∘ a side wall extending substantially parallel to the longitudinal axis, the side wall having a first end that is attached to the bottom wall, and a free, second end,
- a first bearing located at the first end of the side wall,
- a second bearing located at the free, second end of the side wall,
- at least one clamping device for clamping the installation box to the wall, the clamping device comprising
   ∘ a screw member extending parallel to the longitudinal axis, the screw member having a longitudinal screw axis, wherein in an assembled state of the installation box the screw member is supported by the first bearing and the second bearing, the screw member comprising
      ▪ a tip end located at the first end of the side wall
      ▪ a head end located at the free, second end of the side wall, wherein the head end comprises a head configured to be engaged by a screwing tool for rotating the screw member about the screw axis,
      ▪ a first section extending between the tip end and the head end from a first location at the tip end to a second location at a first distance from the first location, the first section comprising outer thread from the first location to the second location,
      ▪ a second section extending between the tip end and the head end from the second location to a third location at a second distance from the second location, the second section having a second section outer diameter,
      ▪ a third section extending between the tip end and the head end from the third location to a fourth location at a third distance from the third location, the third section comprising outer thread from the third location to the fourth location,
   ∘ a first clamp member configured to travel along the screw member between the tip end and the head end, the clamp member comprising
      ▪ a nut part, the nut part comprising inner thread configured to mesh with the outer thread of the first section of the screw member for assembling the installation box assembly, and with the outer thread of the third section of the screw member, wherein the inner thread has an inner minor diameter that is greater than the second section outer diameter of the second section of the screw member,
      ▪ a first clamp part connected to the nut part and extending radially outwards therefrom, the first clamp part being configured to engage the rear side of the wall when installed,
      wherein in the assembled state the installation box is configured to prevent the inner thread of the nut part to mesh with the outer thread of the first section of the screw member upon the exertion of a rotational force and axial pushing force of the screwing tool on the head, while allowing the inner tread of the nut part to mesh with the outer thread of the third section of the screw member upon the exertion of an opposite rotational force and axial pushing force of the screwing tool on the head.

The installation box assembly reduces the risk of losing the first clamp member by preventing the inner thread of the nut part to mesh with the outer thread of the first section of the screw member upon the exertion of a rotational force and axial pushing force of the screwing tool on the head. When a user moves the first clamp member towards the bottom wall, i.e. away from the rear side of the wall during installation, but in particular during uninstallation, by rotating the screw member with for example an electric screwing tool, the first clamp member will stop moving towards the tip end when the nut part is located at the second section of the screw member.

The second section of the screw member prevents a further movement of the first clamp member towards the tip end when the screw member is rotated. The threaded first section further prevents the first clamp member to simply slide off the screw member when the first clamp member is located at the second section. Without the threaded first section the first clamp member may be lost when the screw member for example moves at least slightly out of the first bearing of the assembly.

The outer thread of the first section at the tip end allows the installation box assembly to be assembled in an easy way, without having to deform parts of the installation box assembly, like for example the tip end of the screw member. The first clamp member may simply be screwed on the screw member via the outer thread at the tip end.

In an embodiment of the installation box assembly, the second section is free of outer thread from the second location to the third location.

In an embodiment of the installation box assembly, in side view, the first section of the screw member extends between the bottom wall and the first bearing, wherein the first section does not extend beyond the first bearing. Having the first section not extend beyond the first bearing decreases the risk of meshing the nut part with first section upon a rotation of the screw member when the installation box assembly is in the assembled state. This reduces the risk of losing the first clamp member.

In an embodiment of the installation box assembly, the second section extends from the first bearing towards the second bearing over the second distance. Having the second section extend from the first bearing decreases the risk of meshing the nut part with first section upon a rotation of the screw member when the installation box assembly is in the assembled state. This reduces the risk of losing the first clamp member.

In an embodiment of the installation box assembly, a threaded distance of the inner thread of the nut part is shorter than the second distance. This way, the risk of meshing the inner thread of the nut part with the first section is reduced, and thereby the risk of losing the first clamp member is reduced.

In an embodiment of the installation box assembly, the second section is free of a holding member. Using fewer parts is beneficial from a cost and manufacturing perspective.

In an embodiment of the installation box assembly, the second section is configured to accommodate the first clamping member.

In an embodiment of the installation box assembly, the thread of the first section has a minor diameter and a major diameter, wherein the second section outer diameter is equal to or smaller than the minor diameter.

In an embodiment of the installation box assembly, the thread of the third section has the minor diameter and the major diameter of the first section.

In an embodiment of the installation box assembly, an opening diameter of the first bearing is greater than a major diameter of the first section. An advantage is that the screw member, in particular the first section, can be easily moved through the first bearing. There is also a lower likelihood of damaging the installation box when for example the opening diameter would be smaller than the major diameter of the first section.

In an embodiment of the installation box assembly, the first location is the tip end.

In an embodiment of the installation box assembly, the tip end has a conical, frustoconical, or parabolic shape, converging towards the tip end. This helps in guiding the tip end into the nut part, thereby making assemblance of the installation box assembly easier.

In an embodiment of the installation box assembly, the clamping device comprises a second clamp member, the second clamp member comprising a clamp wall extending outwardly from the side wall at the free, second end thereof, the second clamp member being configured to engage the front side of the wall when installed with a first side thereof facing the bottom wall.

In an embodiment of the installation box assembly, the side wall comprises a screw channel for accommodating the screw member and the nut part, the screw channel extending between the first and second bearing, wherein a clamp recess is provided in the side wall for accommodating the first clamping member therein when the first clamping member is in a storage position, the clamp recess being connected to the screw channel between the third location and the fourth location of the screw member, when seen in side view.

In an embodiment of the installation box assembly, the first bearing comprises a first thin wall having a first hole therein, wherein the second bearing comprises a second thin wall having a second through hole therein.

In a second aspect of the invention, an installation box assembly is provided for mounting in a hole of a wall having a front side and a rear side. The installation box assembly comprises:
- an installation box having a longitudinal axis, comprising
   ∘ a bottom wall extending transverse to the longitudinal axis,
   ∘ a side wall extending substantially parallel to the longitudinal axis, the side wall having a first end that is attached to the bottom wall, and a free, second end,
- a first bearing located at the bottom wall, wherein the first bearing comprises a first thin wall having a first hole therein,
- a second bearing located at the free, second end of the side wall, wherein the second bearing comprises a second thin wall having a second through hole therein,
- at least one clamping device for clamping the installation box to the wall, the clamping device comprising
   ∘ a screw member having a longitudinal screw axis extending parallel to the longitudinal axis, the screw member comprising
      ▪ a tip end located in the first hole of the first bearing,
      ▪ a head end comprising a head configured to be engaged by a screwing tool for rotating the screw member about the screw axis, wherein the head end adjacent the head is located in the second through hole of the second bearing,
      ▪ outer thread,
   ∘ a first clamp member provided on the screw member, the first clamp member comprising
      ▪ a nut part, the nut part comprising inner thread configured to mesh with the outer thread of the screw member, the nut part being configured to travel along the screw member from the first thin wall to the second thin wall upon a rotation of the screw member, and vice versa,
      ▪ a first clamp part connected to the nut part and extending radially outwards therefrom, the first clamp part being configured to engage a rear side of the wall when installed,
   ∘ a second clamp member comprising an insert comprising
      ▪ an insertion part extending into the side wall of the installation box at the free, second end thereof,
      ▪ a screw hole through which the screw member extends,
      ▪ a second clamp part connected to the insertion part, wherein the second clamp part comprises a thin clamp wall extending radially outwardly from the side wall at the free, second end thereof, wherein a first side of the thin clamp wall facing the bottom wall is configured to engage a front side of the wall when installed.

An advantage of the second aspect is that the installation box is better suitable for installation in both thin hollow walls and thick hollow walls, i.e. the range of suitable hollow wall thickness is increased. The first and second bearing are comprised of thin walls, which increases the travel range for the nut part of the first clamp member.

In an embodiment of the installation box assembly, the insert comprises the second thin wall of the second bearing. This way the installation box does not have to provide the second bearing.

In an embodiment of the installation box assembly, the second clamp member is fixed to the installation box via the insertion part in the direction of the longitudinal axis.

In an embodiment of the installation box assembly, a screw hole diameter of the screw hole is smaller than a head diameter of the head. This way the screw head prevents the insert from being pushed out of the side wall.

In an embodiment of the installation box assembly, the first thin wall of the first bearing is part of the bottom wall.

In an embodiment of the installation box assembly, the second thin wall of the second bearing is located at a head distance away from the free, second end of the side wall along the longitudinal axis, said head distance being substantially equal to a height of the head of the screw member. This way the screw member does not extend beyond the front plane of the installation box that is defined by the free, second end of the side wall.

In an embodiment of the installation box assembly, the second thin wall has a thickness of 2 mm or less, preferably 1 mm or less, more preferably 0.5 mm or less.

In an embodiment of the installation box assembly, a distance between the first side of the thin clamp wall of the second clamp part and the engagement surface in a minimum position of the first clamp member is 1 mm or less, and wherein in a maximum position said distance is 45 mm or more.

In an embodiment of the installation box assembly, in a minimum position a minimum clamping distance between the first clamping member and the second clamping member is at most 2% of a height of the installation box, and in a maximum position a maximum clamping distance lies between 85-95% of the height of the installation box.

In an embodiment of the installation box assembly, the first side is substantially flush with a front plane defined by the free, second end.

In an embodiment of the installation box assembly, the insertion part comprises a first leg part and a second leg part, the first leg part extending in a first cavity part of the side wall on a first side of the screw member, the second leg part extending in a second cavity part of the side wall on an opposite, second side of the screw member relative to the longitudinal screw axis.

In an embodiment of the installation box assembly, the first clamp part, in particular the engagement surface, extends under an angle relative to the bottom wall, the angle between the first clamp part and the bottom wall lying between 10 and 30 degrees, preferably between 10 and 20 degrees.

In an embodiment of the installation box assembly, in side view, the tip end does not extend beyond the bottom wall.

In an embodiment of the installation box assembly, the side wall comprises a screw channel for accommodating the screw member and the nut part, the screw channel extending between the first and second bearing.

In an embodiment the installation box assembly comprises two clamping devices diametrically opposed around the side wall, when seen in front view.

In an embodiment of the installation box assembly, the installation box is made of a plastic, and wherein the clamping device is made of a metal. The clamping device being made of metal for example allows for the provision of a thinner clamp wall of the second clamp member.

In particular for the second aspect of the present invention, having the insert made of metal allows for the provision of a thinner wall of the second bearing compared to a second bearing being made from plastic. A thinner wall of the second bearing means that the height of the second bearing itself is smaller, which in turn increases the possible travel range of the nut part of the first clamp member. An increased travel range of the first clamp member in turn broadens the possible thickness range of hollow walls the installation box assembly can be installed in.

Method for assembling an installation box assembly according to the first aspect of the present invention, comprising the steps:
- providing an installation box having a longitudinal axis, comprising
   ∘ a bottom wall extending transverse to the longitudinal axis,
   ∘ a side wall extending substantially parallel to the longitudinal axis, the side wall having a first end that is attached to the bottom wall, and a free, second end,
   ∘ a first bearing located at the first end of the side wall,
   ∘ a second bearing located at the free, second end of the side wall,
- providing a clamping device for clamping the installation box to the wall, the clamping device comprising
   ∘ a screw member comprising
      ▪ a tip end,
      ▪ a head end, wherein the head end comprises a head configured to be engaged by a screwing tool for rotating the screw member about the screw axis,
      ▪ a first section extending between the tip end and the head end from a first location at the tip end to a second location at a first distance from the first location, the first section comprising outer thread from the first location to the second location,
      ▪ a second section extending between the tip end and the head end from the second location to a third location at a second distance from the second location, the second section having a second section outer diameter,
      ▪ a third section extending between the tip end and the head end from the third location to a fourth location at a third distance from the third location, the third section comprising outer thread from the third location to the fourth location,
   ∘ a first clamp member configured to travel along the screw member between the tip end and the head end, the clamp member comprising
      ▪ a nut part, the nut part comprising inner thread configured to mesh with the outer thread of the first section of the screw member, and with the outer thread of the third section of the screw member, wherein the inner thread has an inner minor diameter that is greater than the second section outer diameter of the second section of the screw member,
      ▪ a first clamp part connected to the nut part and extending radially outwards therefrom, the first clamp part being configured to engage the rear side of the wall when installed,
- inserting the tip end of the screw member through the second bearing and moving the tip end of the screw member towards the first bearing,
- screwing the first clamp member on the screw member via the tip end,
- inserting the tip end of the screw member through the first bearing.

The method provides an easy way of assembling the installation box assembly.

These and other aspects of the invention will be more readily appreciated as the same becomes better understood by reference to the following detailed description and considered in connection with the accompanying drawings in which like reference symbols designate like parts.

### BRIEF DESCRIPTION OF THE FIGURES

Figure 1 schematically shows a perspective view of an embodiment of an installation box assembly according to the invention.
Figure 2A schematically shows a side view of an embodiment of a screw member.
Figures 2B and 2C schematically show a cross-section of the screw member of figure 2A with a first clamp member in different positions.
Figure 3 schematically shows a side view of the installation box assembly of figure 1, wherein the first clamp member is in a different position, in particular a storage position.
Figure 4 schematically shows another side view of the installation box assembly as shown in figure 3.
Figure 5 schematically shows a side view of the installation box assembly of figure 1, wherein the first clamp member is in the same position.
Figure 6 schematically shows another side view of the installation box assembly as shown in figure 1.
Figure 7 schematically shows a side view of the installation box assembly of figure 1, wherein the first clamp member is in a different position.
Figure 8 schematically shows another side view of the installation box assembly as shown in figure 7.
Figure 9 schematically shows a rear view of the installation box assembly as shown in the position of figure 3.
Figure 10 schematically shows a front view of the installation box assembly as shown in figure 3.
Figure 11 schematically shows a rear view of the installation box assembly as shown in figure 1.
Figure 12 schematically shows a front view of the installation box assembly as shown in figure 1.
Figure 13 schematically shows in side view a method step for assembling an embodiment of the installation box assembly according to the invention.
Figure 14 schematically shows in side view another method step for assembling an embodiment of the installation box assembly according to the invention.
Figure 15 schematically shows a cross-section of an installation box assembly with a clamping device according to the prior art, mounted to a thin wall.
Figure 16 schematically shows a cross-section of an embodiment of an installation box assembly according to a second aspect of the invention, mounted to a thin wall.
Figure 17 schematically shows a cross-section of an installation box assembly with a clamping device according to the prior art.
Figure 18 schematically shows a cross-section of the installation box assembly of figure 15, mounted to a thicker wall.
Figure 19 shows the same as figure 2C, but in a more close-up view.
Figure 20 schematically shows a close-up view of an embodiment of a clamping device.

### DETAILED DESCRIPTION OF THE FIGURES

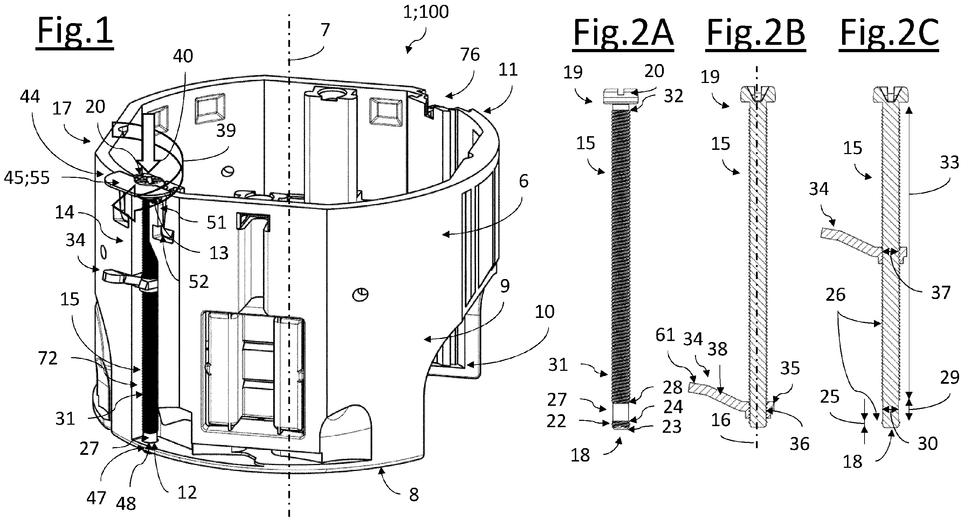

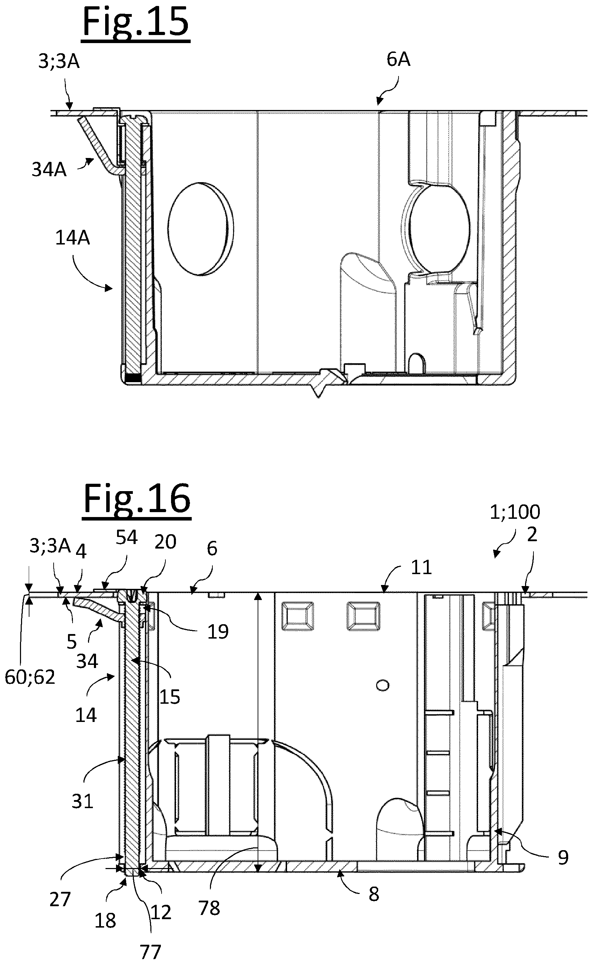

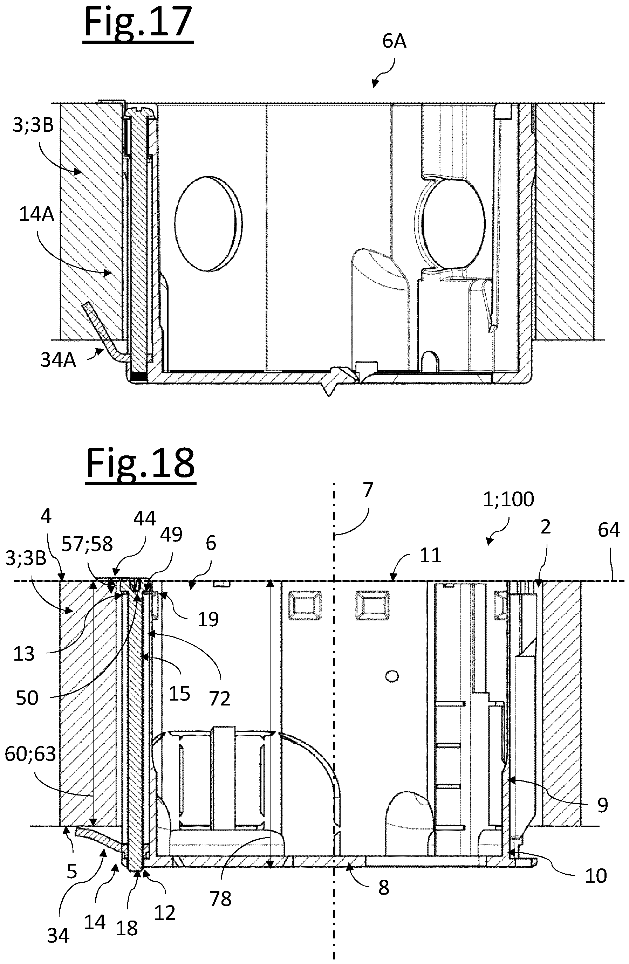

Figures 1, 3 to 14, 16 and 18 schematically show in a first aspect of the invention an embodiment of an installation box assembly 1 for mounting in a hole 2 of a wall 3 having a front side 4 and a rear side 5. Figures 16 and 18 show the installation box assembly 1 of figure 1 mounted to a thin hollow wall 3A and a thicker hollow wall 3B, respectively. With hollow walls the installation box 6 is to be clamped to the hollow wall against the front side 4 of the hollow wall and the rear side 5.

The installation box assembly 1 comprises an installation box 6 having a longitudinal axis 7. The installation box 6 comprises a bottom wall 8 extending transverse to the longitudinal axis 7, and a side wall 9 extending substantially parallel to the longitudinal axis 7. The side wall 9 has a first end 10 that is attached to the bottom wall 8, and a free, second end 11. The bottom wall 8 and side wall 9 define an inner space for accommodating electrical installation components.

The installation box assembly 1 comprises a first bearing 12 located at the first end 10 of the side wall 9, and a second bearing 13 located at the free, second end 11 of the side wall 9.

The installation box assembly 1 comprises at least one clamping device 14 for clamping the installation box 6 to the wall.

The clamping device 14 comprises a screw member 15 extending parallel to the longitudinal axis 7. The screw member 15 has a longitudinal screw axis 16. In an assembled state 17 of the installation box 6 the screw member 15 is supported by the first bearing 12 and the second bearing 13. The screw member 15 is a single piece.

A length of the screw member 15 may be substantially equal to a height of the side wall 9.

The screw member 15 comprises a tip end 18 located at the first end 10 of the side wall 9, and a head end 19 located at the free, second end 11 of the side wall 9. The head end 19 comprises a head 20 configured to be engaged by a screwing tool for rotating the screw member 15 about the screw axis. The screwing tool may for example be a screw driver, in particular an electric screw driver.

The screw member 15 has a first section 22 that extends between the tip end 18 and the head end 19 from a first location 23 at the tip end 18 to a second location 24 at a first distance 25 from the first location 23. The first location 23 may be the tip end 18. The first section 22 comprises outer thread 26 from the first location 23 to the second location 24.

The screw member 15 comprises a second section 27 that extends between the tip end 18 and the head end 19 from the second location 24 to a third location 28 at a second distance 29 from the second location 24. The second section 27 has a second section outer diameter 30.

The second section 27 may be substantially free of outer thread 26 from the second location 24 to the third location 28.

The screw member 15 comprises a third section 31 that extends between the tip end 18 and the head end 19 from the third location 28 to a fourth location 32 at a third distance 33 from the third location 28. The third section 31 comprises outer thread 26 from the third location 28 to the fourth location 32.

The outer thread 26 of the first section 22 and the third section 31 have the same direction, or orientation.

The clamping device 14 comprises a first clamp member 34 that is configured to travel along the screw member 15 between the tip end 18 and the head end 19.

The second section 27 is configured to accommodate the first clamping member. The second section is free of extra parts, such as a holding member for holding the first clamping member.

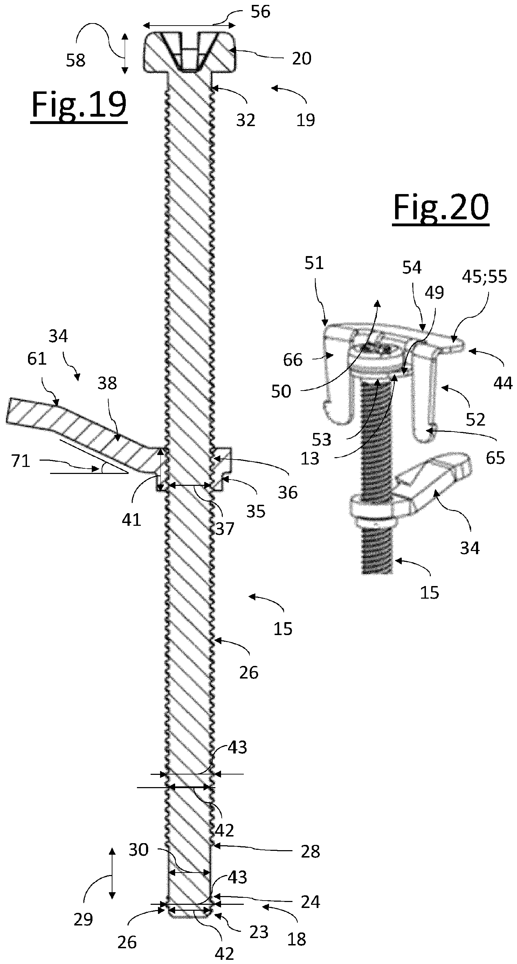

The screw member 15 and the first clamp member 34 of the clamping device 14 are shown together in figures 2B, 2C and 19.

The first clamp member 34 comprises a nut part 35 and a first clamp part 38. The nut part 35 comprises inner thread 36 configured to mesh with the outer thread 26 of the first section 22 of the screw member 15. Said mesh between the outer thread 26 of the first section 22 and the inner thread 36 of the nut part 35 is intended for assembling the installation box assembly 1. The inner thread 36 of the nut part 35 is further configured to mesh with the outer thread 26 of the third section 31 of the screw member 15.

The inner thread 36 has an inner minor diameter 37 that is greater than the second section outer diameter 30 of the second section 27 of the screw member 15. This way the nut part 35 can freely travel along the second section 27 without meshing with the second section 27. Also the screw member 15 can rotate freely relative to the first clamp member 34 when the inner thread 36 of the nut part 35 is located over the second section 27 of the screw member 15.

The first clamp member 34 comprises a first clamp part 38 that is connected to the nut part 35 and extends radially outwards therefrom. The first clamp part 38 is configured to engage the rear side 5 of the wall when installed, see for example figures 16 and 18.

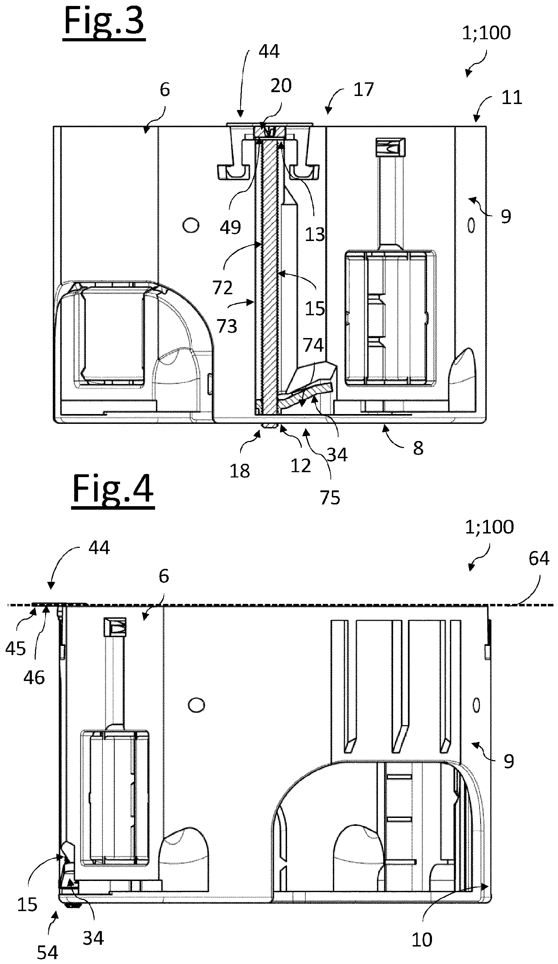

In the assembled state 17, as shown in figure 1, in particular in figures 3 and 4, the installation box assembly 1 is configured to prevent the inner thread 36 of the nut part 35 to mesh with the outer thread 26 of the first section 22 of the screw member 15 upon the exertion of a rotational force 39 and axial pushing force 40 of the screwing tool on the head 20, while allowing the inner tread of the nut part 35 to mesh with the outer thread 26 of the third section 31 of the screw member 15 upon the exertion of an opposite rotational force 39 and axial pushing force 40 of the screwing tool on the head 20.

When the inner thread 36 of the nut part 35 is engaged with the third section 31 of the screw member 15, the first clamp member 34 will travel along the screw member 15 upon a rotation of the screw member 15. This way the first clamp member 34 can be moved toward the rear side 5 of the wall in which the installation box assembly 1 is to be installed, or away from the rear side 5 of said wall in case the installation box assembly 1 is to be uninstalled, or removed from the wall.

In side view, as shown in for example figures 3, 5 and 7, the first section 22 of the screw member 15 extends between the bottom wall 8 and the first bearing 12. The first section 22 does not extend beyond the first bearing 12.

The second section 27 may extend from the first bearing 12 towards the second bearing 13 over the second distance 29.

A threaded distance 41 of the inner thread 36 of the nut part 35 may be shorter than the second distance 29.

The outer thread 26 of the first section 22 has a minor diameter 42 and a major diameter 43. The second section outer diameter 30 may be equal to or smaller than the minor diameter 42.

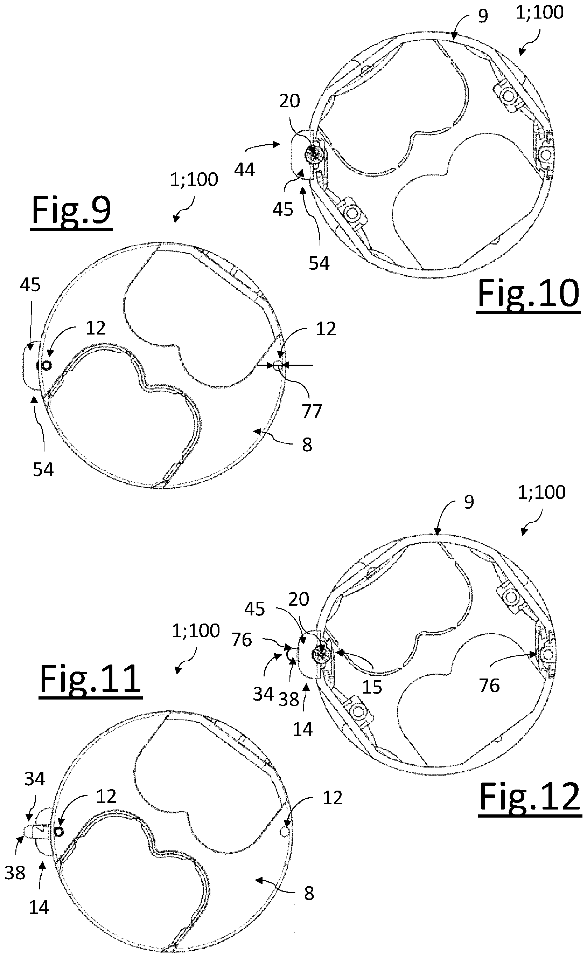

An opening diameter 77 of the first bearing 12, as shown in for example figures 9 and 16, is greater than the major diameter 43 of the first section 22. The opening of the first bearing 12 through which the screw member extends corresponds to the opening diameter 77.

The thread of the third section 31 may also have the minor diameter 42 and the major diameter 43 of the first section 22.

The clamping device 14 comprises a second clamp member 44 located at the free, second end 11 of the side wall 9. The second clamp member 44 comprises a clamp wall 45 extending outwardly from the side wall 9 at the free, second end 11 thereof. The second clamp member 44 is configured to engage the front side 4 of the wall when installed with a first side 46 thereof facing the bottom wall 8, see for example figures 16 and 18. An opposite, second side 70 of the second clamp member 44, faces away from the bottom wall 8.

Although in the shown embodiments only one clamping device 14 is shown, the installation box 6 may, and will typically comprise multiple clamping devices 14 disposed around the side wall 9. For example two clamping devices 14 diametrically opposed around the side wall 9, when seen in front view. Figure 1 for example shows a second clamping device location 76 diametrically opposed relative to the shown clamping device 14.

In side view, the tip end 18 may not extend beyond the bottom wall 8. In the shown figures the tip end 18 extends slightly beyond the bottom wall 8.

The tip end 18 has a conical, frustoconical, or parabolic shape, converging towards the tip end 18.

In side view, the head end 19, in particular the head 20, does not extend beyond the free, second end 11 of the side wall 9, in particular not beyond the front plane 64 defined thereby.

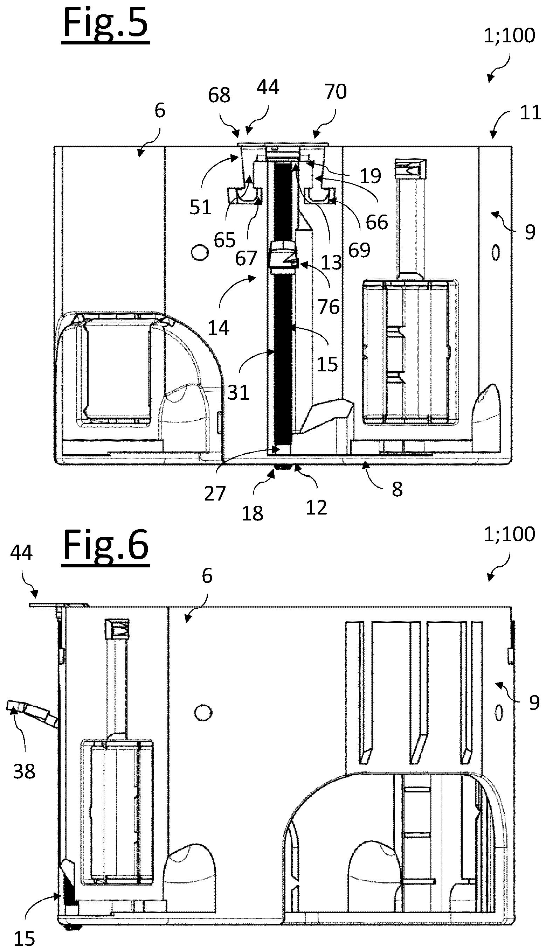

The side wall 9 comprises a screw channel 72 for accommodating the screw member 15 and the nut part 35, the screw channel 72 extending between the first and second bearing 13. The screw channel 72 has a channel wall 73, wherein the first clamp member 34 may engage the channel wall 73 during travel along the third section 31 of the screw member 15. The channel 72 helps in restricting rotation of the first clamp part 38, so that the first clamp part 38 maintains an orientation in which it extends radially away from the side wall 9, see for example the side view of figure 5 or the rear view of figure 11.

A clamp recess 74 is provided in the side wall 9 for accommodating the first clamping member therein when the first clamping member is in a storage position 75. The storage position 75 of the first clamp member 34 is shown in figures 3, 4, 9 and 10. In the storage position 75 the first clamp member 34 does not extend beyond the contour of the bottom wall 8, when seen in the rear view of figure 9. The storage position is beneficial when inserting the installation box through the hole in the wall 3, because it does not require a bigger hole diameter.

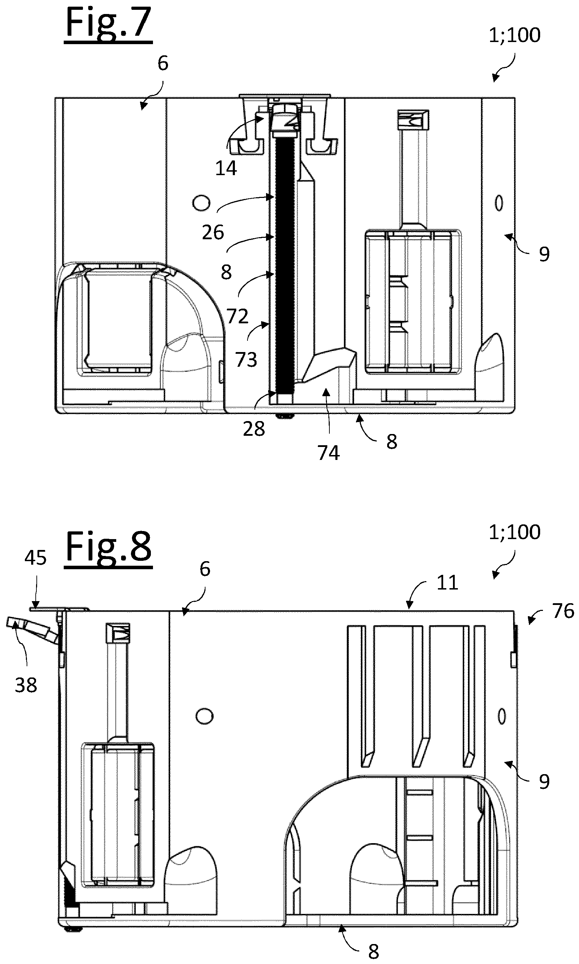

The clamp recess 74 is connected to the screw channel 72 between the third location 28 and the fourth location 32 of the screw member 15, when seen in side view. The clamp recess 74 extends transverse relative to the screw channel 72. See for example the side view of figure 7. The outer thread 26 of the third section 31 extends at least partly into the clamp recess 74 such that the nut part 35 can engage and mesh with said outer thread 31 of the third section 31 in order to move the first clamp member out of the storage position 75 and along the third section 31.

In a deployed position 76 the first clamp part 38 of the first clamp member 34 extends beyond the contour of the bottom wall 8, when seen in the rear view of figure 11, or the front view of figure 12. The deployed position is for example shown in figures 1, 5 and 7. In the deployed position the first clamp member is pivoted approximately 90 degrees relative to the storage position 75.

A second aspect of the invention is best shown in figures 1, 3, 5, 7, in particular in figures 16 and 18. One or more features of the first aspect and second aspect of the present invention may be combined with each other, in particular all features.

The second aspect also relates to an installation box assembly 1 for mounting in a hole 2 of a wall 3, 3A, 3B having a front side 4 and a rear side 5. The installation box assembly 1 comprises an installation box 6 having a longitudinal axis 7.

The installation box 6 comprises a bottom wall 8 extending transverse to the longitudinal axis 7, and a side wall 9 extending substantially parallel to the longitudinal axis 7. The side wall 9 has a first end 10 that is attached to the bottom wall 8, and a free, second end 11.

The installation box assembly 1 comprises a first bearing 12 located at the bottom wall 8, and a second bearing 13 located at the free, second end 11 of the side wall 9. The first bearing 12 comprises a first thin wall 47 having a first hole 48 therein. In the shown embodiments the first thin wall 47 is part of the bottom wall 8. The first bearing 12 is in particular defined by the first thin wall 47. The second bearing 13 comprises a second thin wall 49 having a second through hole 50 therein. The second bearing 13 is in particular defined by the second thin wall 49.

The installation box assembly 1 comprises at least one clamping device 14 for clamping the installation box 6 to the wall. The clamping device 14 comprises a screw member 15 having a longitudinal screw axis 16 extending parallel to the longitudinal axis 7.

The screw member 15 comprises a head end 19 that comprises a head 20 configured to be engaged by a screwing tool for rotating the screw member 15 about the screw axis. The head end 19 adjacent the head 20 is located in the second through hole 50 of the second bearing 13. The screw member 15 comprises a tip end 18 located in the first hole 48 of the first bearing 12.

The screw member 15 has outer thread 26 between the head end 19 and the tip end 18.

The clamping device 14 comprises a first clamp member 34 provided on the screw member 15. The first clamp member 34 comprises a nut part 35 and a first clamp part 38.

The nut part 35 comprises inner thread 36 configured to mesh with the outer thread 26 of the screw member 15. The nut part 35 is configured to travel along the screw member 15 from the first thin wall 47 to the second thin wall 49 upon a rotation of the screw member 15 around its longitudinal screw axis 16, and vice versa.

The clamping device 14 comprises a first clamp part 38 connected to the nut part 35 and extends radially outwards therefrom. The first clamp part 38 is configured to engage a rear side 5 of the wall when installed.

The clamping device 14 comprises a second clamp member 44 located at the free, second end 11 of the side wall 9. The second clamp member 44 comprises an insert 51 comprising an insertion part 52 that extends into the side wall 9 of the installation box 6 at the free, second end 11 thereof. The insert 51 is for example shown in figure 20, wherein the screw member 15 extends through a screw hole 53 of the insert.

The insertion part 52 comprises the screw hole 53 through which the screw member 15 extends. The insert 51 comprises a second clamp part 55 that is connected to the insertion part 52. The second clamp part 55 comprises a thin clamp wall 54 extending radially outwardly from the side wall 9 at the free, second end 11 thereof. A first side 46 of the thin clamp wall 54 facing the bottom wall 8 is configured to engage a front side 4 of the wall when installed. The first side 46 is substantially flush with a front plane 64 defined by the free, second end 11. The first side 46 is substantially parallel with the bottom wall 8.

The insert 51 comprises the second thin wall 49 of the second bearing 13.

The second thin wall 49 of the second bearing 13 is located at a head distance 57 away from the free, second end 11 of the side wall 9 along the longitudinal axis 7, said head distance 57 being substantially equal to a height 58 of the head 20 of the screw member 15.

The second thin wall 49 has a thickness of 2 mm or less, preferably 1 mm or less, more preferably 0.5 mm or less.

The insertion part 52 comprises a first leg part 65 and a second leg part 66, the first leg part 65 extending in a first cavity part 67 of the side wall 9 on a first side 68 of the screw member 15, the second leg part 66 extending in a second cavity part 69 of the side wall 9 on an opposite, second side 70 of the screw member 15 relative to the longitudinal screw axis 16. See for example figure 5.

The second clamp member 44 is fixed to the installation box 6 via the insertion part 52 in the direction of the longitudinal axis 7. The second clamp member 44 is also fixed in the first cavity part 67 and second cavity part 69 in a radial direction.

A screw hole 53 diameter of the screw hole 53 is smaller than a head diameter 56 of the head 20. This way the head 20 of the screw member 15 engages the insertion part 52.

A distance 60 between the first side 46 of the thin clamp wall 54 of the second clamp part 55 and an engagement surface 61 of the first clamp member 34 in a minimum position 62 of the first clamp member 34 is 1 mm, and wherein in a maximum position 63 of the first clamp member 34 said distance is 45 mm. The minimum position 62 is for example shown in figure 16. The maximum position 63 is for example shown in figure 18.

The minimum position 62 and maximum position 63 according to the prior art are respectively shown in figures 15 and 17. Figures 15 and 17 show an installation box 6A with a clamping device 14A. It can be seen in said figures that although the same thin wall 3A can be clamped between a first clamp member 34A and the second clamp member 44 (figure 15), the thicker wall in figure 17 cannot, i.e. the first clamp member 34A cannot reach behind the thicker wall 3B. So with the installation box assembly according to the prior art there is a trade-off between either a suitability for a thin wall 3A, or a thicker wall 3B, whereas the installation box assembly 1 according to the second aspect of the invention allows for the installation in both the thin wall 3A and the thicker wall 3B.

The minimum position and maximum position may instead be expressed in relation to the height 78 of the installation box. In the minimum position a minimum clamping distance between the first clamping member and the second clamping member is at most 2% of a height 78 of the installation box, and in a maximum position a maximum clamping distance lies between 85-95% of the height 78 of the installation box. This combination of minimum and maximum clamping distance provides a more versatile installation box in the sense that it can be clamped on very thin walls as well as on relatively thick walls with respect to its height.

The first clamp part 38, in particular the engagement surface 61, extends under an angle relative to the bottom wall 8 and towards the free, second end 11 of the side wall 9, the angle between the first clamp part 38 and the bottom wall 8 lying between 10 and 30 degrees, preferably between 10 and 20 degrees.

The installation box 6 may be made of a plastic. The clamping device 14 may be made of a metal.

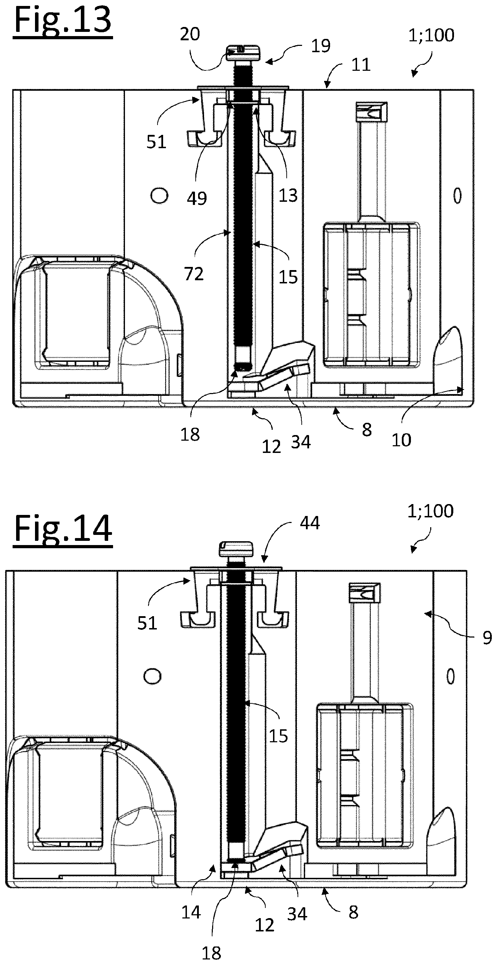

Figures 13, 14 and 3 show different steps of an embodiment of a method according to the invention for assembling an installation box assembly 1.

The method comprises:
- providing an installation box 6 having a longitudinal axis 7, comprising
   ∘ a bottom wall 8 extending transverse to the longitudinal axis 7,
   ∘ a side wall 9 extending substantially parallel to the longitudinal axis 7, the side wall 9 having a first end 10 that is attached to the bottom wall 8, and a free, second end 11,
   ∘ a first bearing 12 located at the first end 10 of the side wall 9,
   ∘ a second bearing 13 located at the free, second end 11 of the side wall 9,
- providing a clamping device 14 for clamping the installation box 6 to the wall, the clamping device 14 comprising
   ∘ a screw member 15 comprising
      ▪ a tip end 18,
      ▪ a head end 19, wherein the head end 19 comprises a head 20 configured to be engaged by a screwing tool for rotating the screw member 15 about the screw axis,
      ▪ a first section 22 extending between the tip end 18 and the head end 19 from a first location 23 at the tip end 18 to a second location 24 at a first distance 25 from the first location 23, the first section 22 comprising outer thread 26 from the first location 23 to the second location 24,
      ▪ a second section 27 extending between the tip end 18 and the head end 19 from the second location 24 to a third location 28 at a second distance 29 from the second location 24, the second section 27 having a second section outer diameter 30,
      ▪ a third section 31 extending between the tip end 18 and the head end 19 from the third location 28 to a fourth location 32 at a third distance 33 from the third location 28, the third section 31 comprising outer thread 26 from the third location 28 to the fourth location 32,
   ∘ a first clamp member 34 configured to travel along the screw member 15 between the tip end 18 and the head end 19, the clamp member comprising
      ▪ a nut part 35, the nut part 35 comprising inner thread 36 configured to mesh with the outer thread 26 of the first section 22 of the screw member 15, and with the outer thread 26 of the third section 31 of the screw member 15, wherein the inner thread 36 has an inner minor diameter 37 that is greater than the second section outer diameter 30 of the second section 27 of the screw member 15,
      ▪ a first clamp part 38 connected to the nut part 35 and extending radially outwards therefrom, the first clamp part 38 being configured to engage the rear side 5 of the wall when installed,
- inserting the tip end 18 of the screw member 15 through the second bearing 13 and moving the tip end 18 of the screw member 15 towards the first bearing 12, see figure 13,
- screwing the first clamp member 34 on the screw member 15 via the tip end 18, see figure 14,
- inserting the tip end 18 of the screw member 15 through the first bearing 12, see figure 3.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

The present invention further relates to the following numbered clauses:
1. An installation box assembly (1) for mounting in a hole (2) of a wall (3) having a front side (4) and a rear side (5), the installation box assembly comprising:
   - an installation box (6) having a longitudinal axis (7), comprising
      ∘ a bottom wall (8) extending transverse to the longitudinal axis,
      ∘ a side wall (9) extending substantially parallel to the longitudinal axis, the side wall having a first end (10) that is attached to the bottom wall, and a free, second end (11),
   - a first bearing (12) located at the first end of the side wall,
   - a second bearing (13) located at the free, second end of the side wall,
   - at least one clamping device (14) for clamping the installation box to the wall, the clamping device comprising
      ∘ a screw member (15) extending parallel to the longitudinal axis, the screw member having a longitudinal screw axis (16), wherein in an assembled state (17) of the installation box the screw member is supported by the first bearing and the second bearing, the screw member comprising
         ▪ a tip end (18) located at the first end of the side wall
         ▪ a head end (19) located at the free, second end of the side wall, wherein the head end comprises a head (20) configured to be engaged by a screwing tool for rotating the screw member about the screw axis,
         ▪ a first section (22) extending between the tip end and the head end from a first location (23) at the tip end to a second location (24) at a first distance (25) from the first location, the first section comprising outer thread (26) from the first location to the second location,
         ▪ a second section (27) extending between the tip end and the head end from the second location to a third location (28) at a second distance (29) from the second location, the second section having a second section outer diameter (30),
         ▪ a third section (31) extending between the tip end and the head end from the third location to a fourth location (32) at a third distance (33) from the third location, the third section comprising outer thread (26) from the third location to the fourth location,
      ∘ a first clamp member (34) configured to travel along the screw member between the tip end and the head end, the first clamp member comprising
         ▪ a nut part (35), the nut part comprising inner thread (36) configured to mesh with the outer thread of the first section of the screw member for assembling the installation box assembly, and with the outer thread of the third section of the screw member, wherein the inner thread has an inner minor diameter (37) that is greater than the second section outer diameter of the second section of the screw member,
         ▪ a first clamp part (38) connected to the nut part and extending radially outwards therefrom, the first clamp part being configured to engage the rear side of the wall when installed,
         wherein in the assembled state the installation box assembly is configured to prevent the inner thread of the nut part to mesh with the outer thread of the first section of the screw member upon the exertion of a rotational force (39) and axial pushing force (40) of the screwing tool on the head, while allowing the inner tread of the nut part to mesh with the outer thread of the third section of the screw member upon the exertion of an opposite rotational force and axial pushing force of the screwing tool on the head.
2. Installation box assembly according to clause 1, wherein the second section is free of outer thread from the second location to the third location.
3. Installation box assembly according to clause 1 or 2, wherein, in side view, the first section of the screw member extends between the bottom wall and the first bearing, wherein the first section does not extend beyond the first bearing.
4. Installation box assembly according to any one of the preceding clauses, wherein the second section extends from the first bearing towards the second bearing over the second distance.
5. Installation box assembly according to any one of the preceding clauses, wherein a threaded distance (41) of the inner thread of the nut part is shorter than the second distance.
6. Installation box assembly according to any one of the preceding clauses, wherein the thread of the first section has a minor diameter (42) and a major diameter (43), wherein the second section outer diameter is equal to or smaller than the minor diameter.
7. Installation box according to the preceding clause, wherein the thread of the third section has the minor diameter and the major diameter of the first section.
8. Installation box assembly according to any one of the preceding clauses, wherein the first location is the tip end.
9. Installation box assembly according to any one of the preceding clauses, wherein the clamping device comprises a second clamp member (44), the second clamp member comprising a clamp wall (45) extending outwardly from the side wall at the free, second end thereof, the second clamp member being configured to engage the front side of the wall when installed with a first side (46) thereof facing the bottom wall.
10. Installation box assembly according to any one of the preceding clauses, wherein the side wall comprises a screw channel (72) for accommodating the screw member and the nut part, the screw channel extending between the first and second bearing, wherein a clamp recess (74) is provided in the side wall for accommodating the first clamping member therein when the first clamping member is in a storage position (75), the clamp recess being connected to the screw channel between the third location and the fourth location of the screw member, when seen in side view.
11. Installation box assembly according to any one of the preceding clauses, wherein the first bearing comprises a first thin wall (47) having a first hole (48) therein, wherein the second bearing comprises a second thin wall (49) having a second through hole (50) therein.
12. An installation box assembly (100) for mounting in a hole (2) of a wall (3;3A;3B) having a front side (4) and a rear side (5), the installation box assembly comprising:
   - an installation box (6) having a longitudinal axis (7), comprising
      ∘ a bottom wall (8) extending transverse to the longitudinal axis,
      ∘ a side wall (9) extending substantially parallel to the longitudinal axis, the side wall having a first end (10) that is attached to the bottom wall, and a free, second end (11),
   - a first bearing (12) located at the bottom wall, wherein the first bearing comprises a first thin wall (47) having a first hole (48) therein,
   - a second bearing (13) located at the free, second end of the side wall, wherein the second bearing comprises a second thin wall (49) having a second through hole (50) therein,
   - at least one clamping device (14) for clamping the installation box to the wall, the clamping device comprising
      ∘ a screw member (15) having a longitudinal screw axis (16) extending parallel to the longitudinal axis, the screw member comprising
         ▪ a tip end (18) located in the first hole of the first bearing,
         ▪ a head end (19) comprising a head (20) configured to be engaged by a screwing tool for rotating the screw member about the screw axis, wherein the head end adjacent the head is located in the second through hole of the second bearing,
         ▪ outer thread (26),
      ∘ a first clamp member (34) provided on the screw member, the first clamp member comprising
         ▪ a nut part (35), the nut part comprising inner thread (36) configured to mesh with the outer thread of the screw member, the nut part being configured to travel along the screw member from the first thin wall to the second thin wall upon a rotation (39) of the screw member, and vice versa,
         ▪ a first clamp part (38) connected to the nut part and extending radially outwards therefrom, the first clamp part being configured to engage the rear side of the wall when installed,
      ∘ a second clamp member (44) comprising an insert (51) comprising
         ▪ an insertion part (52) extending into the side wall of the installation box at the free, second end thereof,
         ▪ a screw hole (53) through which the screw member extends,
         ▪ a second clamp part (55) connected to the insertion part, wherein the second clamp part comprises a thin clamp wall (54) extending radially outwardly from the side wall at the free, second end thereof, wherein a first side (46) of the thin clamp wall facing the bottom wall is configured to engage the front side of the wall when installed.
13. Installation box assembly according to clause 12, wherein the insert comprises the second thin wall of the second bearing.
14. Installation box assembly according to clause 12 or 13, wherein the second clamp member is fixed to the installation box via the insertion part in the direction of the longitudinal axis.
15. Installation box assembly according to any one of clauses 12-14, wherein a screw hole diameter of the screw hole is smaller than a head diameter (56) of the head.
16. Installation box assembly according to any one of the preceding clauses 11 - 15, wherein the first thin wall of the first bearing is part of the bottom wall.
17. Installation box assembly according to any one of the preceding clauses 11 - 16, wherein the second thin wall of the second bearing is located at a head distance (57) away from the free, second end of the side wall along the longitudinal axis, said head distance being substantially equal to a height (58) of the head of the screw member.
18. Installation box assembly according to any one of the preceding clauses 11 - 17, wherein the second thin wall has a thickness of 2 mm or less, preferably 1 mm or less, more preferably 0.5 mm or less.
19. Installation box assembly according to any one of the preceding clauses 11 - 18, wherein a distance (60) between the first side of the thin clamp wall of the second clamp part and the engagement surface (61) in a minimum position (62) of the first clamp member is 1 mm or less, and wherein in a maximum position (63) said distance is 45 mm or more.
20. Installation box assembly according to any one of the preceding clauses 9 -19, wherein the first side is substantially flush with a front plane (64) defined by the free, second end.
21. Installation box assembly according to any one of the preceding clauses 12-20, wherein the insertion part comprises a first leg part (65) and a second leg part (66), the first leg part extending in a first cavity part (67) of the side wall on a first side (68) of the screw member, the second leg part extending in a second cavity part (69) of the side wall on an opposite, second side (70) of the screw member relative to the longitudinal screw axis.
22. Installation box assembly according to any one of the preceding clauses, wherein the first clamp part, in particular the engagement surface (61), extends under an angle (71) relative to the bottom wall, the angle between the first clamp part and the bottom wall lying between 10 and 30 degrees, preferably between 10 and 20 degrees.
23. Installation box assembly according to any one of the preceding clauses, wherein, in side view, the tip end does not extend beyond the bottom wall.
24. Installation box assembly according to any one of the preceding clauses, wherein the tip end has a conical, frustoconical, or parabolic shape, converging towards the tip end.
25. Installation box assembly according to any one of the preceding clauses, wherein the side wall comprises a screw channel (72) for accommodating the screw member and the nut part, the screw channel extending between the first and second bearing.
26. Installation box assembly according to any one of the preceding clauses, comprising two clamping devices diametrically opposed around the side wall, when seen in front view.
27. Installation box assembly according to any one of the preceding clauses, wherein the installation box is made of a plastic, and wherein the clamping device is made of a metal.
28. Method for assembling an installation box assembly (1) according to any one of the preceding clauses 1 - 11, 22 - 27, comprising the steps:
   - providing an installation box having a longitudinal axis, comprising
      ∘ a bottom wall extending transverse to the longitudinal axis,
      ∘ a side wall extending substantially parallel to the longitudinal axis, the side wall having a first end that is attached to the bottom wall, and a free, second end,
      ∘ a first bearing located at the first end of the side wall,
      ∘ a second bearing located at the free, second end of the side wall,
   - providing a clamping device for clamping the installation box to the wall, the clamping device comprising
      ∘ a screw member comprising
         ▪ a tip end,
         ▪ a head end, wherein the head end comprises a head configured to be engaged by a screwing tool for rotating the screw member about the screw axis,
         ▪ a first section extending between the tip end and the head end from a first location at the tip end to a second location at a first distance from the first location, the first section comprising outer thread from the first location to the second location,
         ▪ a second section extending between the tip end and the head end from the second location to a third location at a second distance from the second location, the second section having a second section outer diameter,
         ▪ a third section extending between the tip end and the head end from the third location to a fourth location at a third distance from the third location, the third section comprising outer thread from the third location to the fourth location,
      ∘ a first clamp member configured to travel along the screw member between the tip end and the head end, the clamp member comprising
         ▪ a nut part, the nut part comprising inner thread configured to mesh with the outer thread of the first section of the screw member, and with the outer thread of the third section of the screw member, wherein the inner thread has an inner minor diameter that is greater than the second section outer diameter of the second section of the screw member,
         ▪ a first clamp part connected to the nut part and extending radially outwards therefrom, the first clamp part being configured to engage the rear side of the wall when installed,
   - inserting the tip end of the screw member through the second bearing and moving the tip end of the screw member towards the first bearing,
   - screwing the first clamp member on the screw member via the tip end,
   - inserting the tip end of the screw member through the first bearing.

## Claims

1. An installation box assembly (1) for mounting in a hole (2) of a wall (3) having a front side (4) and a rear side (5), the installation box assembly comprising:
- an installation box (6) having a longitudinal axis (7), comprising
∘ a bottom wall (8) extending transverse to the longitudinal axis,
∘ a side wall (9) extending substantially parallel to the longitudinal axis, the side wall having a first end (10) that is attached to the bottom wall, and a free, second end (11),
- a first bearing (12) located at the first end of the side wall,
- a second bearing (13) located at the free, second end of the side wall,
- at least one clamping device (14) for clamping the installation box to the wall, the clamping device comprising
∘ a screw member (15) extending parallel to the longitudinal axis, the screw member having a longitudinal screw axis (16), wherein in an assembled state (17) of the installation box the screw member is supported by the first bearing and the second bearing, the screw member comprising
▪ a tip end (18) located at the first end of the side wall
▪ a head end (19) located at the free, second end of the side wall, wherein the head end comprises a head (20) configured to be engaged by a screwing tool for rotating the screw member about the screw axis,
▪ a first section (22) extending between the tip end and the head end from a first location (23) at the tip end to a second location (24) at a first distance (25) from the first location, the first section comprising outer thread (26) from the first location to the second location,
▪ a second section (27) extending between the tip end and the head end from the second location to a third location (28) at a second distance (29) from the second location, the second section having a second section outer diameter (30),
▪ a third section (31) extending between the tip end and the head end from the third location to a fourth location (32) at a third distance (33) from the third location, the third section comprising outer thread (26) from the third location to the fourth location,
∘ a first clamp member (34) configured to travel along the screw member between the tip end and the head end, the first clamp member comprising
▪ a nut part (35), the nut part comprising inner thread (36) configured to mesh with the outer thread of the first section of the screw member for assembling the installation box assembly, and with the outer thread of the third section of the screw member, wherein the inner thread has an inner minor diameter (37) that is greater than the second section outer diameter of the second section of the screw member,
▪ a first clamp part (38) connected to the nut part and extending radially outwards therefrom, the first clamp part being configured to engage the rear side of the wall when installed,
wherein in the assembled state the installation box assembly is configured to prevent the inner thread of the nut part to mesh with the outer thread of the first section of the screw member upon the exertion of a rotational force (39) and axial pushing force (40) of the screwing tool on the head, while allowing the inner tread of the nut part to mesh with the outer thread of the third section of the screw member upon the exertion of an opposite rotational force and axial pushing force of the screwing tool on the head.

2. Installation box assembly according to claim 1, wherein the second section is free of a holding member.

3. Installation box assembly according to claim 1 or 2, wherein the second section is configured to accommodate the first clamping member.

4. Installation box assembly according to any one of the preceding claims, wherein the second section is free of outer thread from the second location to the third location.

5. Installation box assembly according to any one of the preceding claims, wherein, in side view, the first section of the screw member extends between the bottom wall and the first bearing, wherein the first section does not extend beyond the first bearing.

6. Installation box assembly according to any one of the preceding claims, wherein the second section extends from the first bearing towards the second bearing over the second distance.

7. Installation box assembly according to any one of the preceding claims, wherein a threaded distance (41) of the inner thread of the nut part is shorter than the second distance.

8. Installation box assembly according to any one of the preceding claims, wherein the thread of the first section has a minor diameter (42) and a major diameter (43), wherein the second section outer diameter is equal to or smaller than the minor diameter.

9. Installation box according to the preceding claim, wherein the thread of the third section has the minor diameter and the major diameter of the first section.

10. Installation box assembly according to any one of the preceding claims, wherein an opening diameter (77) of the first bearing is greater than a major diameter (43) of the first section.

11. Installation box assembly according to any one of the preceding claims, wherein the first location is the tip end.

12. Installation box assembly according to any one of the preceding claims, wherein the clamping device comprises a second clamp member (44), the second clamp member comprising a clamp wall (45) extending outwardly from the side wall at the free, second end thereof, the second clamp member being configured to engage the front side of the wall when installed with a first side (46) thereof facing the bottom wall.

13. Installation box assembly according to any one of the preceding claims, wherein the side wall comprises a screw channel (72) for accommodating the screw member and the nut part, the screw channel extending between the first and second bearing, wherein a clamp recess (74) is provided in the side wall for accommodating the first clamping member therein when the first clamping member is in a storage position (75), the clamp recess being connected to the screw channel between the third location and the fourth location of the screw member, when seen in side view.

14. Installation box assembly according to any one of the preceding claims, wherein the first bearing comprises a first thin wall (47) having a first hole (48) therein, wherein the second bearing comprises a second thin wall (49) having a second through hole (50) therein.

15. Method for assembling an installation box assembly (1) according to any one of the preceding claims 1 - 14, comprising the steps:
- providing an installation box having a longitudinal axis, comprising
∘ a bottom wall extending transverse to the longitudinal axis,
∘ a side wall extending substantially parallel to the longitudinal axis, the side wall having a first end that is attached to the bottom wall, and a free, second end,
∘ a first bearing located at the first end of the side wall,
∘ a second bearing located at the free, second end of the side wall,
- providing a clamping device for clamping the installation box to the wall, the clamping device comprising
∘ a screw member comprising
▪ a tip end,
▪ a head end, wherein the head end comprises a head configured to be engaged by a screwing tool for rotating the screw member about the screw axis,
▪ a first section extending between the tip end and the head end from a first location at the tip end to a second location at a first distance from the first location, the first section comprising outer thread from the first location to the second location,
▪ a second section extending between the tip end and the head end from the second location to a third location at a second distance from the second location, the second section having a second section outer diameter,
▪ a third section extending between the tip end and the head end from the third location to a fourth location at a third distance from the third location, the third section comprising outer thread from the third location to the fourth location,
∘ a first clamp member configured to travel along the screw member between the tip end and the head end, the clamp member comprising
▪ a nut part, the nut part comprising inner thread configured to mesh with the outer thread of the first section of the screw member, and with the outer thread of the third section of the screw member, wherein the inner thread has an inner minor diameter that is greater than the second section outer diameter of the second section of the screw member,
▪ a first clamp part connected to the nut part and extending radially outwards therefrom, the first clamp part being configured to engage the rear side of the wall when installed,
- inserting the tip end of the screw member through the second bearing and moving the tip end of the screw member towards the first bearing,
- screwing the first clamp member on the screw member via the tip end,
- inserting the tip end of the screw member through the first bearing.
